# EUROPÄISCHE PATENTSCHRIFT

(11) **EP 1 380 597 B1**
(45) Veröffentlichungstag und Bekanntmachung des Hinweises auf die Patenterteilung: **22.02.2006**
(21) Anmeldenummer: 03011870.7
(22) Anmeldetag: 27.05.2003
(51) Int. Cl.: C08F 2/38, C08F 212/00

(54) **Latices für Papierbeschichtungen auf der Basis halogen- und schwefelfreier Molekulargewichtsregler**
Latexes for paper coatings based on halogen and sulphur free molecular weight regulators
Latex pour le couchage du papier à base de régulateurs du poids moléculaire exempts de halogène et soufre

(30) Priorität: 08.07.2002 DE 10230793
(43) Veröffentlichungstag der Anmeldung: 14.01.2004
(73) Patentinhaber: PolymerLatex GmbH, 45772 Marl (DE)
(72) Erfinder: Schulze, Uwe, Dr., 40670 Meerbusch (DE)
(74) Vertreter: Sternagel, Fleischer, Godemeyer & Partner

(56) Entgegenhaltungen:
- WO-A-95/02087
- WO-A-95/30697
- WO-A-96/30415
- US-A- 3 595 823
- US-A- 3 766 151
- US-A- 5 612 430
- US-A- 5 708 104

## Beschreibung

Die vorliegende Erfindung betrifft Polymerlatices, die mit Hilfe halogen- und schwefelfreier Molekulargewichtsregler hergestellt wurden, und die für Papierstreichanwendungen, insbesondere im Bereich geruchssensitiver Anwendungen (z. B. Lebensmittelverpackungen) verwendet werden können.

Latices, die für das Streichen von Papier und Karton eingesetzt werden können, müssen gute Eigenschaften in Bezug auf Bindekraft (d. h. Rupffestigkeit) besitzen. Dazu ist es notwendig, dass Molekulargewicht der Polymerlatices bei der Polymerisation mit sog. Reglern zu kontrollieren. In der Vergangenheit wurden zu diesem Zweck halogenhaltige Verbindungen (z. B. Tetrachlorkohlenstoff) verwendet. Aus ökologischen Gründen wurden diese Regler aber bereits vor einigen Jahren aus den Polymerlatices "verbannt" und durch schwefelhaltige Regler ersetzt. Die bekannteste Gruppe dieser Regler sind die Mercaptane, dessen prominentester Vertreter wiederum das tert.-Dodecylmercaptan ist (t-DDM).

Mercaptane erfüllen die Anforderungen in Bezug auf die Reglerwirkung in Polymerlatices sehr gut, d. h. man erhält durch die Verwendung von Mercaptanen Latices, die über sehr gute Trocken- und Nassrupffestigkeiten verfügen. Der große Nachteil von Latices, die mit Hilfe von Mercaptanen hergestellt worden sind, ist allerdings, dass sie in bestimmten Anwendungen bei der Beschichtung des Papiers zu unerwünschten Geruchsbelästigungen führen. Dies ist insbesondere im Bereich der Verpackungspapiere und -kartons ein entscheidender Nachteil. Polymerlatices, die für diese geruchssensitiven Anwendungen eingesetzt werden, dürfen daher keine schwefelhaltigen Regler enthalten.

Das US 5 837 762 beschreibt den Einsatz von kolophoniumhaltigen Kettenüberträgern für die Herstellung von Polymerlatices. Die so synthetisierten Latices haben den Nachteil, dass die Reglereffizienz von Kolophonium im Gegensatz zu Mercaptanan sehr gering ist. So müssen bis zu 9 pph Kolophonium bei der Polymerisation des Latex eingesetzt werden, um zu akzeptablen Werten bei der Trockenrupffestigkeit im gestrichenen Papier zu gelangen.

Außerdem handelt es sich bei Kolophonium um ein Naturprodukt, das je nach Herkunftsquelle gewissen Qualitätsschwankungen unterliegt. Als dritter Nachteil ist schließlich zu erwähnen, dass Kolophonium eine starke Eigenfärbung aufweist (gelb bis braun), die ebenfalls zu Qualitätsnachteilen im gestrichenen Papier fuhren kann.

Außerhalb des Gebietes wässriger Polymerdispersionen (Latices) sind in der Patentliteratur verschiedene Peroxide zitiert, die eine regelnde Wirkung haben sollen. So beschreibt z.B. WO 9630415 A1 den Einsatz von Alkoxyallyl(di)peroxiden als Molekulargewichtsregler bei der radikalischen Polymerisation von Styrol, Methylmethacrylat und Butylacrylat. Die JP 63179902 A2 berichtet über den Einsatz von Cumolhydroperoxid als Molekulargewichtregler bei der radikalischen Polymerisation von ungesättigten Monomeren wie z.B. Styrol.

U.S.-Patent Nr. 3,595,823 und U.S.-Patent Nr. 3,766,151 beschreiben Terpolymere aus Styrol, Acrylnitril und einem weiteren Acrylmonomer, die unter Verwendung von Persulfaten und tert.-Butylhydroperoxid polymerisiert werden und als organische Pigmente in der Papierbeschichtung verwendet werden können. Die Terpolymere enthalten keine strukturellen Einheiten, die sich von konjugierten Dienmonomeren ableiten und sind daher auch nicht als Bindemittel geeignet.

Die Aufgabenstellung war daher, nach alternativen Reglersystemen zu suchen, die weder halogenhaltig, noch schwefelhaltig sind und die dennoch geeignet sind, Polymerlatices mit ausreichender Bindekraft (d.h. Rupffestigkeit) herzustellen und die im Bereich geruchsintensiver Anwendungen für das Streichen von Papier und Karton verwendet werden können.

Die Aufgabe wurde gemäß den Patentansprüchen gelöst.

Gegenstand der Erfindung ist ein Polymerlatex zur Verwendung beim Streichen von Papier und Karton, wobei der Polymerlatex eine Glastemperatur zwischen - 30 °C und 70 °C besitzt, hergestellt mit einem schwefel- und halogenfreien Kettenübertragungsmittel und umfassend, in polymerisierter Form:
a) von 10 Gew.-% bis 80 Gew.% von einem oder mehreren monovinylaromatischen Monomeren;
b) von 20 Gew.-% bis 70 Gew.-% von einem oder mehreren konjugierten Dienmonomeren;
c) von 0 Gew.-% bis 70 Gew.-% von einem oder mehreren Acrylatmonomeren: und
d) wobei der Rest ein bzw. mehrere andere copolymerisierbare Comonomere sind,

dadurch gekennzeichnet, dass das Kettenübertragungsmittel ein Peroxid ist, ausgewählt aus mindestens einem Vertreter der folgenden Formeln

### 1. Hydroneroxide der allgemeinen Strukturformel

R―O―O―H

wobei R = H oder eine der folgenden Reste bedeutet:
C₁― C₁₆ Alkyl (linear oder verzweigt),
C₁― C₁₆ Alkyl (linear oder verzweigt) in Kombination mit C₁― C₁₈ Aryl,
C₁― C₁₈ Aryl;

### 2 Peroxide der allgemeinen Strukturformel

R1―O―O―R2

wobei R1 und R2 gleich oder verschieden sind und einer der folgenden Reste bedeuten:
C₁― C₁₆ Alkyl (linear oder verzweigt),
C₁― C₁₆ Alkyl (linear oder verzweigt) in Kombination mit C₁― C₁₈ Aryl,
C₁― C₁₈ Aryl;

### 3 Peroxide der allgemeinen Strukturformel

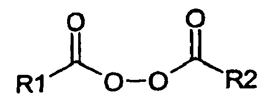

wobei R1 und R2 gleich oder verschieden sind und einer der folgenden Reste bedeuten:
C₁ ― C₁₆ Alkyl (linear oder verzweigt),
C₁ ― C₁₆ Alkyl (linear oder verzweigt) in Kombination mit C₁ ― C₁₈ Aryl,
C₁ ―C₁₈ Aryl;

### 4 Peroxocarbonsäuren der allgemeinen Strukturformel

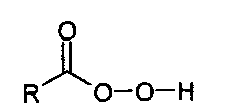

wobei R = H oder einer der folgenden Reste bedeutet:
C₁ ―C₁₆ Alkyl (linear oder verzweigt),
C₁― C₁₆ Alkyl (linear oder verzweigt) in Kombination mit C₁― C₁₈ Aryl,
C₁―C₁₈ Aryl;

### 5 Peroxocarbonsäureester der allgemeinen Strukturformel

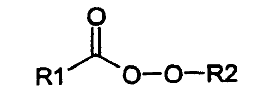

wobei R1 und R2 gleich oder verschieden sind und einer der folgenden Reste bedeuten:
C₁― C₁₆ Alkyl (linear oder verzweigt),
C₁― C₁₆ Alkyl (linear oder verzweigt) in Kombination mit C₁ ― C₁₈ Aryl,
C₁ ― C₁₈ Aryl;

### 6. Peroxodicarbonate der allgemeinen Strukturformel

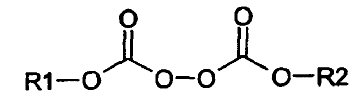

wobei R1 und R 2 gleich oder verschieden sind und einer der folgenden Reste bedeuten:
C₁―C₁₆ Alkyl (linear oder verzweigt),
C₁― C₁₆ Alkyl (linear oder verzweigt) in Kombination mit C₁― C₁₈ Aryl,
C₁―C₁₈ Aryl.

Weiterer Gegenstand ist ein Verfahren zur Herstellung von Polymerlatex, wobei der Polymerlatex eine Glastemperatur zwischen -30 °C und 70 °C besitzt, hergestellt mit einem schwefel- und halogenfreien Kettenübertragungsmittel und umfassend, in polymerisierter Form:
a) von 10 Gew.-% bis 80 Gew.-% von einem oder mehreren monovinylaromatischen Monomeren;
b) von 20 Gew.-% bis 70 Gew.-% von einem oder mehreren konjugierten Dienmonomeren;
c) von 0 Gew.-% bis 70 Gew.-% von einem oder mehreren Acrylatmonomeren; und
d) wobei der Rest ein bzw. mehrere andere copolymerisierbare Comonomere sind,

dadurch gekennzeichnet, dass das Kettenübertragungsmittel ein Peroxid ist, ausgewählt aus mindestens einem Vertreter der folgenden Formeln

### 1. Hydroperoxide der allgemeinen Stnckturformel

R―O―O―H

wobei R = H oder eine der folgenden Reste bedeutet:
C₁-C₁₆ Alkyl (linear oder verzweigt),
C₁-C₁₆ Alkyl (linear oder verzweigt) in Kombination mit C₁-C₁₈ Aryl,
C₁-C₁₈ Aryl;

### 2. Peroxide der allgemeinen Strukturformel

R1―O―O―R2

wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl,
C₁-C₁₈ Aryl;

### 3. Peroxide der allgemeinen Strukturformel

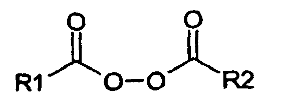

wobei R1 und R2 gleich oder verschieden sind und einer der folgenden Reste bedeuten:
C₁ ― C₁₆ Alkyl (linear oder verzweigt),
C₁―C₁₆ Alkyl (linear oder verzweigt) in Kombination mit C₁ ― C₁₈ Aryl,
C₁ ― C₁₈ Aryl;

### 4. Peroxocarbonsäuren der allgemeinen Strukturformel

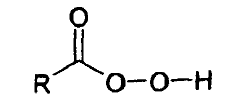

wobei R = H oder einer der folgenden Reste bedeutet:
C₁―C₁₆ Alkyl (linear oder verzweigt),
C₁―C₁₆ Alkyl (linear oder verzweigt) in Kombination mit C₁― C₁₈ Aryl,
C₁―C₁₈ Aryl;

### 5. Peroxocarbonsäureester der allgemeinen Strukturformel

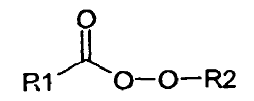

wobei R1 und R2 gleich oder verschieden sind und einer der folgenden Reste bedeuten:
C₁― C₁₆ Alkyl (linear oder verzweigt),
C₁―C₁₆ Alkyl (linear oder verzweigt) in Kombination mit C₁ ― C₁₈ Aryl,
C₁― C₁₈ Aryl;

### 6 Peroxodicarbonate der allgemeinen Strukturformel

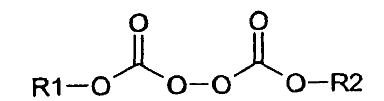

wobei R1 und R 2 gleich oder verschieden sind und einer der folgenden Reste bedeuten:
C₁ ― C₁₆ Alkyl (linear oder verzweigt),
C₁ ― C₁₆ Alkyl (linear oder verzweigt) in Kombination mit C₁ ― C₁₈ Aryl,
C₁ ― C₁₈ Aryl.

Ebenfalls Gegenstand der Erfindung ist die Verwendung eines Polymerlatex, hergestellt mit einem Peroxid als Kettenübertragungsmittel, zum Streichen von Papier und Karton sowie die Verwendung von Peroxiden zur Herstellung dieser speziellen Latices.

Als Peroxide sind die oben aufgeführten Verbindungen gemäß der Strukturformeln, besonders jedoch die Hydroperoxide geeignet.

Besonders geeignet und besonders bevorzugt werden t-Butylhydroperoxid und Cumolhydroperoxid eingesetzt. Desweiteren bevorzugt eingesetzt werden Di-t-butylperoxid, t-Butylperoxybenzoat und t-Butylperoxy-3,5,5-trimethylhexanoat.

Typische Einsatzmengen der Peroxide liegen im Bereich von 0,1 - 10 Gew.-%, bevorzugt von 0,5 - 5 Gew.-, besonders bevorzugt von 0,5 bis 3 Gew.-% bezogen auf 100 Gew.-% Monomer. Damit kann eine analoge Vernetzungsdichte im Polymeren erzielt werden wie mit schwefelhaltigen Reglern (messbar z. B. durch Bestimmung des Gelgehalts des Polymeren). Die erhaltenen Polymerlatices weisen in Bezug auf ihre anwendungstechnischen Eigenschaften, wie z. B. Rupffestigkeit im Papierstrich, sehr gute Eigenschaften auf, die mit denen von Mercaptan geregelten Polymerlatices vergleichbar sind. Es versteht sich dabei, dass die eingesetzten Peroxide, insbesondere t-Butylhydroperoxid und Cumolhydroperoxid unter den beschriebenen Bedingungen nicht geeignet ist, als Initiator bei der Polymerisation zu fungieren. Dafür benötigt man ein separates Initiatorsystem, wie z. B. Ammoniumpersulfat oder Natriumpersulfat. Ohne den Zusatz eines Initiators würde die Polymerisation nicht funktionieren, was als Beweis dienen kann, dass die eingesetzten Peroxide, insbesondere das t-Butylhydroperoxid und Cumolhydroperoxid unter den Polymerisationsbedingungen nicht als Initiator sondern als Molekulargewichtsregler fungiert. Für den Einsatz als Regler im Sinne der vorliegenden Erfindung sind daher nur Peroxide geeignet, die bei den vorliegenden Polymerisationstemperaturen keinen oder nur einen sehr geringen thermischen Zerfall zeigen. Außerdem muss darauf geachtet werden, dass kein starkes Reduktionsmittel im System vorhanden ist, dass einen spontanen Zerfall des Peroxids initiieren könnte (sog. Redox-Initiatorsystem).

Repräsentative monovinylidenaromatische Monomere schließen beispielsweise ein: Styrol, α-Methylstyrol, p-Methylstyrol, t-Butylstyrol und Vinyltoluol. Mischungen von einem oder mehreren monovinylidenaromatischen Monomeren können ebenfalls verwendet werden. Die bevorzugten Monomeren sind Styrol und α-Methylstyrol. Das monovinylidenaromatische Monomere wird im Allgemeinen in einem Bereich von 10 bis 80 Gew.-%, bevorzugt von 25 bis 75 Gew.-%, am meisten bevorzugt von 35 bis 70 Gew.-%, bezogen auf das Gesamtgewicht der Monomeren, verwendet.

Zur Herstellung der Latices geeignete konjugierte Dienmonomere schließen konjugierte Dienmonomere wie beispielsweise 1,3-Butadien, Isopren und 2,3-Dimethyl-1,3-butadien ein. 1,3-Butadien ist bei der vorliegenden Erfindung bevorzugt. Typischerweise reicht die Menge von konjugiertem Dienmonomerem (falls eingesetzt), welches in der polymeren Phase vorhanden ist, von 20 bis 70 Gew.-%, bevorzugt 20 bis 65 Gew.-%, mehr bevorzugt 20 bis 55 Gew.-%, mehr bevorzugt 30 bis 50 Gew.-%, am meisten bevorzugt 30 bis 45 Gew.-%, bezogen auf das Gesamtgewicht der Monomeren.

In der vorliegenden Erfindung brauchbare Acrylatmonomere schließen beispielsweise ein: n-, iso- oder tert.-Alkylester von Acryl- oder Methacrylsäure, worin die Alkylgruppe von 1 bis 20 Kohlenstoffatome besitzt, das Reaktionsprodukt von (Meth)arcylsäure mit dem Glycidyleste einer Neosäure wie Versaticsäuren, Neodecansäuren oder Pivalinsäure. Zusätzlich können die Acrylatmonomere Säuren, Ester, Amide von (Meth)acrylsäure und substituierte Derivate hiervon einschließen.

Im Allgemeinen sind die bevorzugten Acrylatmonomere C₁-C₁₀-Alkyl(meth)acrylate oder Alkoxy-C₁-C₁₀-alkyl(meth)acrylate, am meisten bevorzugt C₁-C₈-Alkyl(meth)acrylate oder Alkoxy-C₁-C₈-alkyl(meth)acrylate. Beispiele solcher Acrylatmonomere schließen ein n-Butylacrylat, sec-ButylacrYlat, Ethylacrylat, Hexylacrylat, tert.-Butylacrylat, 2-Ethylhexylacrylat, iso-Octylacrylat, 4-Methyl-2-pentylacrylat, 2-Methylbutylacrylat, Methylmethacrylat, Butylmethacrylat, n-Butylmethacrylat, Isobutylmethacrylat, Ethylmethacrylat, Isopropylmethacrylat, Hexylmethacrylat, Cyclohexylmethacrylat und Cetylmethacrylat, Methoxyethylmethacrylat, Ethoxyethylacrylat, Butoxyetbylmethacrylat, Methoxybutylacrylat und Methoxyethoxyethylacrylat.

Bevorzugte Acrylatmonomere sind n-Butylacrylat, Butylmethacrylat, 2-Ethylhexylacrylat und Methylmethacrylat, wobei Methylmethacrylat und N-Butylacrylat besonders bevorzugt sind. Häufig werden zwei oder mehr Acrylatmonomere verwendet. Die Alkylester von Acryl- oder Methacrylsäure und Alkoxyalkyl(meth)acrylatmonomere können als ein Teil der Monomerenmischung eingesetzt werden.

Typischerweise hängt die Menge von Acrylatmonomeren (falls eingesetzt), welche in der polymeren Phase vorliegen, von dem ausgewählten Monomeren ab, jedoch ist der typische Bereich von 0 bis 70 Gew.-%, bevorzugt 0 bis 60 Gew.-%, am meisten bevorzugt 0 bis 51 Gew.-%, bezogen auf das Gesamtgewicht der Monomeren.

Es ist kritisch, dass der kombinierte Gewichtsprozentsatz von konjugiertem/n Dienmonomerem/n (Komponente B) und Acrylatmonomerem/n (Komponente C) größer als Null ist, bevorzugt größer als 10 Gew.-%.

Wie zuvor angegeben, schließen andere polymerisierbare Comonomere beispielsweise ein: ethyleaartig ungesättigte Carbonsäuremonomere, Nitrilmonomere, Vinylestermonomere, Hydroxyalkyl(meth)acrylatmonomere, Alkoxyalkyl(meth)acrylatmonomere, (Meth)acryl-amidmonomere.

Die zur Verwendung in der vorliegenden Erfindung geeigneten ethylenartig ungesättigten Carbonsäuremonomere schließen Monocarbonsäure und Dicarbonsäuremonomere und deren Monoester ein. Es wurde gefunden, dass der Zusatz eines solchen ethylenartig ungesättigten Carbonsäuremonomeren in starkem Maße die Stabilität des Latex und die Haftung der Latexfilme verbessert, wodurch sie zur Verwendung bei Formulierungen zum Streichen von Papier geeignet werden. Für die praktische Durchführung der vorliegenden Erfindung ist es bevorzugt, ethylenartig ungesättigte aliphatische Mono- oder Dicarbonsäure/n oder -säureanhydrid/e zu verwenden, welche 3 bis 5 Kohlenstoffatome enthalten. Beispiele für Monocarbonsäuremonomere schließen beispielsweise ein: Acrylsäure, Methacrylsäure, und Beispiele für Dicarbonsäuremonomere schließen beispielsweise ein: Fumarsäure, Itaconsäure, Crotonsäure, Maleinsäure und Maleinsäureanhydrid.

Die Verwendung von ethylenartig ungesättigtem Carbonsäuremonomerem beeinflusst die Eigenschaften der Polymerdispersion und der hieraus hergestellten Beschichtungen. Der Typ und die Menge dieser Monomeren werden hierdurch festgestellt. Typischerweise beträgt eine solche Menge von 0 bis 20 Gew.-%, bevorzugt 0 bis 10 Gew.-%, am meisten bevorzugt 1 bis 10 Gew.-%, bezogen auf das Gesamtgewicht der Monomeren.

In dieser Erfindung brauchbare Nitrilmonomere schließen polymerisierbare ungesättigte aliphatische Nitrilmonomere ein, welche 2 bis 4 Kohlenstoffatome in einer linearen oder verzweigtkettigen Anordnung enthalten und welche wahlweise mit Acetyl oder zusätzlichen Nitrilgruppen substituiert sein können. Solche Nitrilmonomere schließen beispielsweise Acrylnitril, Methacrylnitril und Fumarnitril ein, wobei Acrylnitril bevorzugt ist. Diese Nitrilmonomere (falls eingesetzt) können in Mengen bis zu etwa 25 Gew.-Teilen, bevorzugt 0 bis 15 Gew.-Teilen, bezogen auf 100 Gesamtgewichts-Teile von Monomeren, eingeschlossen sein.

Vinylestermonomere, welche hier brauchbar sind, schließen Vinylacetat, Vinylpropionat, Vinylbutyrat, Vinylbenzoat, Vinyl-2-ethylhexanoat, Vinylstearat und die Vinylester von Versaticsäure ein. Das am meisten bevorzugte Vinylestermonomere zur Verwendung in der vorliegenden Erfindung ist Vinylacetat. Typischerweise reicht die Menge an Vinylestermonomerem (falls eingesetzt), welche in der polymeren Phase vorliegt, von 0 bis 45 Gew.-%, bevorzugt 0 bis 35 Gew.-%, bezogen auf das Gesamtgewicht der Monomeren.

Die Hydroxyalkyl(meth)acrylatmonomere, welche hier brauchbar sind, schließen Hydroxyalkylacrylat- und methacrylatmonomere ein, welche auf Ethylenoxid, Propylenoxid oder anderen höheren Alkylenoxiden oder Mischungen hiervon basieren. Beispiele sind Hydroxyethylacrylat, Hydroxypropylacrylat, Hydroxyethylmethacrylat, Hydroxypropylmethacrylat und Hydroxybutylacrylat. Bevorzugte Hydroxyalkyl(meth)acrylatmonomere sind Hydroxyethylacrylat, Hydroxypropylacrylat und Hydroxybutylacrylat. Typischerweise hängt die Menge von Hydroxyalkyl(meth)acrylatmonomerem (falls eingesetzt), das in der polymeren Phase vorliegt, von dem ausgewählten Monomeren ab, jedoch beträgt der typische Bereich von 0 bis 15 Gew.%, bevorzugt 0 bis 10 Gew.-%, am meisten bevorzugt 1 bis 9 Gew.-%, bezogen auf das Gesamtgewicht der Monomeren.

Alkoxyalkyl(meth)acrylatmonomere, welche in dieser Erfindung brauchbar sind, schließen Methoxyethylmethacrylat, Ethoxyethylmethacrylat, Methoxyethylacrylat, Ethoxyethylacrylat, Butoxyethylmethacrylat, Methoxybutylacrylat und Methoxyethoxyethylacrylat ein. Bevorzugte Alkoxyalkyl(meth)acrylatmonomere sind Ethoxyethylacrylat und Methoxyethylacrylat. Typischerweise hängt die Menge von Alkoxyalkyl(meth)acrylatmonomerem (falls eingesetzt), das in der polymeren Phase vorhanden ist, von dem ausgewählten Monomeren ab, jedoch beträgt der typische Bereich von 0 bis 65 Gew.-%, bevorzugt 0 bis 45 Gew.-%, bezogen auf das Gesamtgewicht der Monomeren.

(Meth)acrylamidmonomere, welche hier brauchbar sind, schließen die Amide von α,β-olefinartig ungesättigten Carbonsäuren ein, wie beispielsweise Acrylamid, Methacrylamid und Diacetonacrylamid. Das bevorzugte (Meth)acrylamidmonomere ist Acrylamid. Typischerweise hängt die Menge von (Meth)acrylamidmonomerem (falls eingesetzt), das in der polymeren Phase vorhanden ist, von dem ausgewählten Monomeren ab, jedoch beträgt der typische Bereich von 0 bis 10 Gew.-%, bevorzugt 0 bis 5 Gew.-%, am meisten bevorzugt 0 bis 2 Gew.-% bezogen auf das Gesamtgewicht der Monomeren.

Bei einer Ausführungsform umfasst die Polymerlatexzusammensetzung der vorliegenden Erfindung Styrol, Butadien, Acrylsäure und ein Peroxid als Kettenübertragungsmittel.

Bei einer anderen Ausführungsform umfasst die Polymerlatexzusammensetzung der vorliegenden Erfindung Styrol, Butadien, Acrylnitril, Acrylsäure und ein Peroxid als Kettenübertragungsmittel.

Im Allgemeinen kann die Polymerlatexzusammensetzung der vorliegenden Erfindung durch Polymerisationsverfahren hergestellt werden, welche auf dem Fachgebiet bekannt sind, und insbesondere durch die bekannten Latexemulsionspolymerisationsverfahren, einschließlich einer mit Impfstoffen (Saatlatex) und nicht mit Impfstoffen durchgeführtenLatexpolymerisation. Repräsentative Verfahren schließen diejenigen ein, welche in der US-A-4 478 974, 4 751 111, 4 968 740, 3 563 946 und 3 575 913 und der DE-A-19 05 256 beschrieben sind. Solche Verfahren können erforderlichenfalls für die Polymerisation der zuvor beschriebenen Monomeren angepasst werden. Das Verfahren der Einführung der Monomeren und anderer Inhaltsstoffe, wie von Polymerisationshilfsstoffen, ist nicht besonders kritisch. Die Polymerisation wird dann unter konventionellen Bedingungen durchgeführt, bis der gewünschte Polymerisationsgrad erreicht ist. Vernetzungsmittel und die wohtbekannten Hilfsstoffe für Latexpolymerisation wie Initiatoren, Tenside und Emulgatoren können je nach Erfordernis verwendet werden.

Gegenstand der Erfindung ist ein Verfahren zur Herstellung von Polymerlatex, wobei der Polymerlatex eine Glastemperatur zwischen -30 °C und 70 °C besitzt, hergestellt mit einem Schwefel und Halogen freien Kettenübertragungsmittel und umfassend, in polymerisierter Form:
a) von 10 Gew.-% bis 80 Gew.-% von einem oder mehreren monovinylaromatischen Monomeren;
b) von 20 Gew.-% bis 70 Gew.-% von einem oder mehreren konjugierten Dienmonomeren;
c) von 0 Gew.-% bis 70 Gew.-% von einem oder mehreren Acrylatmonomeren; und
d) wobei der Rest ein bzw. mehrere andere copolymerisierbare Comonomere sind,

dadurch gekennzeichnet, dass das Kettenübertragungsmittel ein Peroxid ist, ausgewählt aus mindestens einem Vertreter der folgenden Formeln

### 1. Hydroperoxide der allgemeinen Strukturformel

R―O―O―H

wobei R = H oder eine der folgenden Reste bedeutet:
C₁― C₁₆ Alkyl (linear oder verzweigt),
C₁- C₁₆ Alkyl (linear oder verzweigt) in Kombination mit C₁- C₁₈ Aryl,
C₁- C₁₈ Aryl;

### 2 Peroxide der allgemeinen Strukturformel

R1―O―O―R2

wobei R1 und R2 gleich oder verschieden sind und einer der folgenden Reste bedeuten:
C₁ ― C₁₆ Alkyl (linear oder verzweigt),
C₁ ― C₁₆ Alkyl (linear oder verzweigt) in Kombination mit C₁― C₁₈ Aryl,
C₁―C₁₈ Aryl;

### 3 Peroxide der allgemeinen Strukturformel

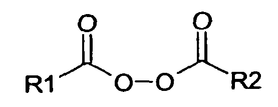

wobei R1 und R2 gleich oder verschieden sind und einer der folgenden Reste bedeuten:
C₁―C₁₆ Alkyl (linear oder verzweigt),
C₁― C₁₆ Alkyl (linear oder verzweigt) in Kombination mit C₁―C₁₈ Aryl,
C₁―C₁₈ Aryl;

### 4 Peroxocarbonsäuren der allgemeinen Strukturformel

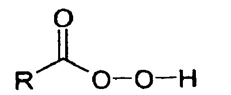

wobei R = H oder einer der folgenden Reste bedeutet:
C₁― C₁₆ Alkyl (linear oder verzweigt),
C₁― C₁₆ Alkyl (linear oder verzweigt) in Kombination mit C₁―C₁₈ Aryl,
C₁― C₁₈ Aryl;

### 5. Peroxocarbonsäureester der allgemeinen Strukturformel

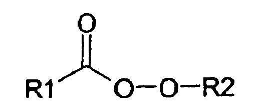

wobei R1 und R2 gleich oder verschieden sind und einer der folgenden Reste bedeuten:
C₁ ― C₁₆ Alkyl (linear oder verzweigt),
C₁ ― C₁₆ Alkyl (linear oder verzweigt) in Kombination mit C₁ ―C₁₈ Aryl,
C₁ ― C₁₈ Aryl;

### 6 Peroxodicarbonate der allgemeinen Strukturformel

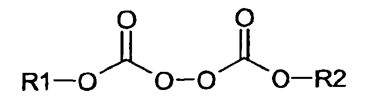

wobei R1 und R 2 gleich oder verschieden sind und einer der folgenden Reste bedeuten:
C₁ ― C₁₆ Alkyl (linear oder verzweigt),
C₁ ― C₁₆ Alkyl (linear oder verzweigt) in Kombination mit C₁ ― C₁₈ Aryl,
C₁ ―C₁₈ Aryl

bei Temperaturen von 0 bis 130 °C, bevorzugt von 60 bis 130°C, besonders bevorzugt von 60 bis 100°C, ganz besonders bevorzugt von 75 bis 100°C in Gegenwart von einem oder mehreren Emulgatoren und einem oder mehreren Initiatoren, wie z. B. bevorzugt Natriumpersulfat oder Ammoniumpersulfat.

Bei der Durchführung der vorliegenden Erfindung brauchbare Initiatoren schließen wasserlösliche und/oder öllösliche Initiatoren ein, welche für die Zwecke der Polymerisation wirksam sind. Repräsentative Initiatoren sind auf dem Fachgebiet wohlbekannt und schließen beispielsweise ein: Azoverbindungen (wie z.B. AIBN), und Persulfate (wie z.B. Kaliumpersulfat, Natriumpersulfat und Ammoniumpersulftat).

Der Initiator wird in einer ausreichenden Menge verwendet, um die Polymerisationsreaktion mit einer gewünschten Geschwindigkeit zu initiieren. Im allgemeinen reicht die Initiatormenge von 0,05 bis 5, bevorzugt 0,1 bis 4 Gew.-%, bezogen auf das Gewicht des Gesamtpolymeren. Am meisten bevorzugt beträgt die Initiatormenge von 0,1 bis 3 Gew.-%, bezogen auf das Gesamtgewicht des Polymeren.

Tenside oder Emulgatoren, welche zur Stabilisierung der Latexteüchen hier geeignet sind, schließen solche konventionellen grenzflächenaktiven Mittel ein, welche typischerweise auf dem Fachgebiet für Polymerisationsverfahren bekannt sind. Das/die Tensid/e kann zu der wässrigen Phase und/oder der Monomerenphase zugesetzt werden. Eine effektive Menge an Tensid bei einem Impfverfahren ist die Menge, welche zur Unterstützung der Stabilisierung des Teilchens als Kolloid, der Minimierung des Kontaktes zwischen den Teilchen und der Verhütung einer Koagulation ausgewählt wurde. Bei einem Nichtimpfverfahren ist eine effektive Menge an Tensid die Menge, welche zur Beeinflussung der Teilchengröße ausgewählt wurde.

Repräsentative Tenside schließen gesättigte und ethylenartig ungesättigte Sulfonsäuren oder Salze hiervon ein, einschließlich beispielsweise Hydrocarbonsulfonsäure, wie Vinylsulfonsäure, Allylsulfonsäure und Methallylsulfonsäure, und Salze hiervon; aromatische Hydrocarbonsäuren, wie beispielsweise p-Styrolsulfonsäure, Isopropenylbenzolsulfonsäure und Vinyloxybenzolsulfonsäure und Salze hiervon; Sulfoalkylester von Acrylsäure und Methacrylsäure, wie beispielsweise Sulfoethylmethacrylat und Sulfopropylmethacrylat und Salze hiervon, sowie 2-Acrylamido-2-methylpropansulfonsäure und Salze hiervon; alkylierte Diphenyloxiddisulfonate, Natriumdodecylbenzolsulfonate und Dihexylester von Natriumsulfobemsteinsäure, ethoxylierte Alkylphenole und ethoxylierte Alkohole; Fettalkohol(poly)ethersulfate.

Der Typ und die Konzentration des Tensids hängen typischerweise von dem Gehalt an Polymerfeststoffen ab. Ein höherer Gehalt an Polymerfeststoffen erhöht im allgemeinen die Notwendigkeit für Tensid. Typischerweise wird das Tensid in Mengen von 0,05 bis 20, bevorzugt von 0,05 bis 10, mehr bevorzugt von 0,05 bis 5 Gew.-Teilen, bezogen auf das Gesamtgewicht der Monomeren, eingesetzt.

Verschiedene Schutzkolloide können ebenfalls anstelle der oder zusätzlich zu den zuvor beschriebenen Tensiden verwendet werden. Geeignete Kolloide schließen partiell acetylierten Polyvinylalkohol, Kasein, Hydroxyethylstärke, Carboxymethylcellulose, Hydroxyethylcellulose, Hydroxypropylcellulose und Gummi arabicum ein. Die bevorzugten Schutzkolloide sind Carboxymethylcellulose, Hydroxyethylcellulose und Hydroxypropylcellulose. Im allgemeinen werden diese Schutzkolloide bei Gehalten von 0 bis 10, bevorzugt 0 bis 5, mehr bevorzugt 0 bis 2 Gew.-Teilen, bezogen auf das Gesamtgewicht der Monomeren, eingesetzt.

Verschiedene andere Zusatzstoffe und Inhaltstoffe, welche dem Fachmann auf dem Gebiet bekannt sind, können eingegeben werden, um die Latexzusammensetzung der vorliegenden Erfindung herzustellen. Solche Zusatzstoffe schließen beispielsweise ein: Antischaummittel, Netzmittel, Verdickungsmittel, Weichmacher, Füllstoffe, Pigmente, Vernetzungsrnittel, Antioxidantien und Metallchelatierungsmittel. Bekannte Antischaummittel schließen Silikonöle und Acetylenglykole ein. Übliche bekannte Netzmittel schließen Alkylphenolethoxylate, Alkalimetalldialkylsulfosuccinate, Acetylenglykole und Alkalimetallalkylsulfat ein. Typische Verdickungsmittel schließen Polyacrylate, Polyacrylamide, Xanthangumme, modifizierte Cellulosen oder teilchenformige Verdickungsmittel wie Kieselerden und Tone ein. Typische Weichmacher schließen Mineralöl, flüssige Polybutene, flüssige Polyacrylate und Lanolin ein. Zinkoxid, Titandioxid, Aluminiumhydrat, Calciumcarbonat und Ton sind die typischerweise eingesetzten Füllstoffe.

Die folgenden Beispiele dienen zur Erläuterung der Erfindung.

### Verwendete Messmethoden

### Glasübergangstemperatur:

Die Glasüberganstemperatur wird mit Hilfe eines Differential Scanning Calorimeters vom Typ "Perkin-Elmer DSC 7" bestimmt. Dazu trocknet man den Polymerlatex in einer Teflonform bei Raumtemperatur für drei Tage und anschließend weitere 20 Stunden bei 65°C. Die Messungen werden in einem Temperaturbereich von -60°C bis 100°C bei einer Aufheizgeschwindigkeit von 20 K/min durchgeführt. Die Glasübergangstemperatur wird als Wendepunkt der DSC-Kurve angegeben.

### Gelgehalt:

Mit Hilfe des Gelgehalts bestimmt man die unlösliche Fraktion eines Polymeren in einem bestimmten Lösungsmittel. Im vorliegenden Fall dient die Messung des Gelgehalts zur Bestimmung der Vernetzung des Polymerlatex. Als Lösungsmittel wird dabei Toluol verwendet. Die Quellung erfolgt an Filmen, die wie oben beschrieben hergestellt werden. Das in Toluol unlösliche Gel wird durch Filtration abgetrennt, getrocknet und ausgewogen. Der Gelgehalt definiert sich als der Quotient aus dem Gewicht des getrockneten Gels dividiert durch das Gewicht des ursprünglichen Latexfilms (vor Quellung mit Toluol) und wird in Prozent angegeben.

### Gelpermeationschromatographie (GPC):

Mit Hilfe der GPC ist es möglich, die Molmasse von Polymeren zu bestimmen. Dafür ist es notwendig, dass sich die Polymeren im verwendeten Lösungsmittel vollständig lösen. Im vorliegenden Fall wird Tetrahydrofuran als Lösungsmittel verwendet. Die Flußgeschwindigkeit beträgt 1 ml/min. Zur Kalibrierung der Säulen werden Polystyrol Standards verwendet.

### Herstellung von Streichfarbenformulierungen zum Streichen von Papier und Karton:

Die Latices werden jeweils mit 11 Gewichtsteilen in einer Formulierung aus 30 Gewichtsteilen Clay und 70 Gewichtsteilen Carbonat eingesetzt. Der pH-Wert der Formulierung beträgt dabei 8,5 und der Feststoffgehalt 65 %. Jede Formulierung wird auf einem holz-freien Rohpapier mit einem Gewicht von 67 g/m² bei einem Strichgewicht von 12 g/m² aufgetragen.

### Strichglanz:

Der Strichglanz wird mit einem Glanzmessgerät des Typs "LGDL-03 Labor" der Firma Lehmann bestimmt. Der Messkopf weist dabei eine 75° Geometrie auf (Tappi Norm). Das zu messende Papier liegt plan auf einer glatten Fläche. Von jedem Versuchspunkt werden jeweils drei Bögen ausgewählt, wobei an jedem Bogen fünf Einzelmessungen durchgeführt werden. Der angegebene Wert für den Strichglanz stellt den Mittelwert aus den Einzelmessungen dar.

### Druckglanz:

Das gestrichene Papier wird auf einer Mehrzweckprobedruckmaschine der Firma Prüfbau mit der Farbe "Reflecta-schwarz 49 N 8000" der Firma Huber bedruckt. Der Anpressdruck der Walzen beträgt dabei 500 N und die Druckgeschwindigkeit 0,5 m/s. Die Messung des Glanzwertes am bedrucktem Papier erfolgt analog der oben beschriebenen Messung des Strichglanz.

### Trockenrupffestigkeit:

Die Trockenrupffestigkeit wird mit einer Mehrzweckprobedruckmaschine der Firma Prüfbau bestimmt. Dabei werden von jedem Versuchspunkt mindestens drei Prüfstreifen mit der Farbe 408004 der Firma. Huber mit einer Geschwindigkeit von 2 m/s (steigend) bedruckt. Der angegebene Messwert für die Trockenrupffestigkeit stellt den Mittelwert der Einzelmessungen dar.

### Rückspaltfestigkeit:

Die Rückspaltfestigkeit wird mit einer Mehrzweckprobedruckmaschine der Firma Prüfbau bestimmt. Dabei wird von jedem Versuchspunkt ein Prüfstreifen mit der Farbe 520068 der Firma Huber mit einer Geschwindigkeit von 0,5 m/s bedruckt. Der gleiche Streifen wird nach 10 s wieder mit der gleichen Walze bedruckt. Dieser Vorgang wird sooft wiederholt, bis das Papier Rupfstellen aufweist. Die Anzahl an Druckvorgängen bis zum Auftreten von Rupfstellen ergibt den Messwert für die Rückspaltfestigkeit.

### Druckfarbenwegschlag:

Die Geschwindigkeit des Druckfarbenwegschlags wird mit einer Mehrzweckprobedruckmaschine der Firma Prüfbau bestimmt. Dabei wird von jedem Versuchspunkt ein Prüfstreifen mit der Farbe 520068 der Firma Huber mit einer Geschwindigkeit von 0,5 m/s bedruckt. Der Streifen wird sofort nach dem Druckvorgang mit einem Konterstreifen bedeckt und nach 15 s für eine Strecke von 5 cm durch das Druckwerk geführt. Nach weiteren Zeitstufen (z.B. 30 s, 60 s, 180 s) wird der Druckträger jeweils um 5 cm weitergeführt. Auf diese Weise erfolgt ein Farbübertrag von dem bedruckten Streifen auf den Konterstreifen. Die Auswertung der Farbdichte erfolgt mit einem Densitometer vom Typ "RD 918" der Firma Macbeth. Die Farbdichte auf dem Konterstreifen in Abhängigkeit des Zeitintervalls ergibt ein Maß für die Geschwindigkeit des Druckfarbenwegschlags.

### Herstellung der Modell-Latices:

Zur Untersuchung der Reglereffizienz der beschriebenen Peroxide werden Modell-Latices synthetisiert (basierend auf Styrol und Acrylsäure). Diese werden durch Emulsionspolymerisation einer Monomerzusammensetzung von 96 Gew.-% Styrol und 4 Gew.-% Acrylsäure in Gegenwart von 1 Gew.-% Emulgator (Natrium-dodecylbenzolsulfonat) und variierenden Mengen und Typen von Peroxid-Kettenübertragungsmitteln hergestellt. Diese Polymerisation wird als eine beimpfte radikalische Emulsionspolymerisation mit einer Teilchengröße von 150 bis 160 Nanometer (nm) bei einer Temperatur zwischen 75°C bis 95°C durchgeführt. Die Molmasse der Polymeren kann mit Hilfe einer Gelpermeationschromatographie (GPC) untersucht werden.

### Herstellung der Latices:

Die beschriebenen Polymerlatices werden durch Emulsionspolymerisation einer Monomerzusammensetzung von 56 Gew.-% Styrol, 40 Gew.-% Butadien, 4 Gew.-% Acrylsäure in Gegenwart von 0,6 Gew.-% Emulgator (Natrium-dodecylbenzolsulfonat) und variierenden Mengen und Typen von Peroxid-Kettenübertragungsmitteln hergestellt. Diese Polymerisation wird als eine beimpfte radikalische Emulsionspolymerisation mit einer Teilchengröße von 150 bis 160 Nanometer (nm) bei einer Temperatur zwischen 75°C bis 95°C durchgeführt.

### Beispiele

**Tabelle 1: Eigenschaften der Modell-Latices**

| **Latex** | **Reglertyp** | **Regler- menge (pph)** | **Teilchen- größe (nm)** | **M**_{**n**} **(g/mol)** | **M**_{**w**} **(g/mol)** | **M**_{**w**} **/ M**_{**n**} |
|---|---|---|---|---|---|---|
| M1 | --- | --- | 155 | 112400 | 689600 | 6,14 |
| M2 | t-Butylhydroperoxid | 1,0 | 155 | 46500 | 194400 | 4,18 |
| M3 | Cumolhydroperoxid | 1,0 | 155 | 30700 | 88300 | 2,88 |

Im vorliegenden Beispiel zeigt sich die Effizienz der eingesetzen Peroxide als Regler in der niedrigeren Molmasse und in der niedrigeren Polydispersität der Latices M2 und M3 im Vergleich zu Latex M1.

**Tabelle 2: Latexeigenschaften**

| **Latex** | **Reglertyp** | **Regler- menge (pph)** | **Polym. temp. (°C)** | **Teilchen- größe (nm)** | **Glastemp. (°C)** | **Gelgehalt (%)** |
|---|---|---|---|---|---|---|
| Ref.* | t-DDM | 1,1 | 85 | 165 | 18 | 74 |
| 1 | -- | --- | 85 | 155 | 14 | 98 |
| 2 | t-Butylhydroperoxid | 0,5 | 75 | 155 | 14 | 88 |
| 3 | t-Butylhydroperoxid | 0,5 | 80 | 155 | 14 | 90 |
| 4 | t-Butylhydroperoxid | 1,0 | 75 | 155 | 14 | 79 |
| 5 | t-Butylhydroperoxid | 1,0 | 80 | 150 | 14 | 83 |
| 6 | Cumolhydroperoxid | 1,0 | 85 | 160 | 14 | 93 |
| 7 | Cumolhydroperoxid | 1,5 | 85 | 155 | 14 | 83 |
| 8 | Cumolhydroperoxid | 2,0 | 85 | 160 | 14 | 72 |
| 9 | Di-t-butylperoxid | 1,0 | 95 | 160 | 14 | 98 |
| 10 | t-Butylperoxy- benzoat | 1,0 | 85 | 160 | 14 | 96 |
| 11 | t-Butylperoxy-3,5,5- trimethylhexanoat | 1,0 | 85 | 155 | 14 | 96 |

| | | | | | | |
|---|---|---|---|---|---|---|
| *) Standard XSBR-Latex mit großer Anwendungsbreite | | | | | | |

**Tabelle 3: Eigenschaften der gestrichenen Papiere**

| Latex | Strichglanz (%) | Druckglanz | (%) festigkeit (cm/s) | Rückspalt- festigkeit (Anzahl Druck- vorgänge) | Druckfarben-wegschlag (Farbdichte Konterstreifen nach 15 s) |
|---|---|---|---|---|---|
| Ref.* | 67 | 73 | 84 | 6 | 0,74 |
| 1 | 67 | 60 | 40 | 2 | 0,40 |
| 2 | 63 | 69 | 93 | 4 | 0,56 |
| 3 | 64 | 69 | 80 | 4 | 0,57 |
| 4 | 67 | 71 | 97 | 3 | 0,61 |
| 5 | 66 | 72 | 88 | 4 | 0,66 |
| 6 | 65 | 71 | 69 | 3 | 0,59 |
| 7 | 65 | 75 | 72 | 4 | 0,65 |
| 8 | 66 | 78 | 85 | 5 | 0,78 |
| 9 | 66 | 60 | 51 | 3 | 0,39 |

| | | | | | |
|---|---|---|---|---|---|
| *) Standard XSBR-Latex mit großer Anwendungsbreite | | | | | |

## Patentansprüche

1. Polymerlatex zur Verwendung beim Streichen von Papier und Karton, wobei der Polymerlatex eine Glastemperatur zwischen -30 °C und 70 °C besitzt, hergestellt mit einem schwefel- und halogenfreien Kettenübertragungsmittel und umfassend, in polymerisierter Form:
a) von 10 Gew.-% bis 80 Gew.-% von einem oder mehreren monovinylaromatischen Monomeren;
b) von 20 Gew.-% bis 70 Gew.-% von einem oder mehreren konjugierten Dienmonomeren:
c) von 0 Gew.-% bis 70 Gew.-% von einem oder mehreren Acrylatmonomeren: und
d) wobei der Rest ein bzw. mehrere andere copolymerisierbare Comonomere sind,
**dadurch gekennzeichnet,**
**dass** das Kettenübertragungsmittel ein Peroxid ist, ausgewählt aus mindestens einem Vertreter der folgenden Formeln
1. Hydroperoxide der allgemeinen Strukturformel
R-O-O-H
wobei R = H oder einer der folgenden Reste bedeutet:
C₁-C₁₆ Alkyl (linear oder verzweigt).
C₁-C₁₆ Alkyl (linear oder verzweigt) in Kombination mit C₁-C₁₈. Aryl ,
C₁-C₁₈ Aryl :
2. Peroxide der allgemeinen Strukturformel
R1-O-O-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁- C₁₈ Aryl ,
C₁-C₁₈ Aryl :
3. Peroxide der allgemeinen Strukturformel
R1-C(0)-0-0-C(0)-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl .
C₁-C₁₈ Aryl ;
4. Peroxocarbonsäuren der allgemeinen Strukturformel
R-C(0)-0-0-H
wobei R = H oder einer der folgenden Reste bedeutet:
C₁-C₁₆ Alkyl (linear oder verzweigt),
C₁-C₁₆ Alkyl (linear oder verzweigt) in Kombination mit C₁-C₁₈ Aryl ,
C₁- C₁₈ Aryl ;
5. Peroxocarbonsäureester der allgemeinen Strukturformel
R1-C(0)-0-0-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl ,
C₁-C₁₈ Aryl ;
6 Peroxodicarbonate der allgemeinen Strukturformel
R1-0-C(0)-0-0-C(0)-0-R2
wobei R1 und R2 gleich oder verschieden sind und einer der folgenden Reste bedeuten:
C₁-C₁₆ Alkyl (linear oder verzweigt),
C₁-C₁₆, Alkyl (linear oder verzweigt) in Kombination mit C₁-C₁₈ Aryl ,
C₁-C₁₈. Aryl .

2. Polymerlatex nach Anspruch 1, wobei mindestens ein Peroxid aus der Gruppe der Hydroperoxide ausgewählt wird.

3. Polymerlatex nach Anspruch 2, wobei das Peroxid ausgewählt wird aus t-Butylhydroperoxid und/oder Cumolhydroperoxid

4. Polymerlatex nach Anspruch 1, wobei ein Peroxid ausgewählt wird aus Di-t-butylperoxid, t-Butylperoxybenzoat und t-Butylperoxy-3,5,5-trimethylhexanoat.

5. Polymerlatex nach einem der Ansprüche 1 bis 4, worin die Komponente aus a) Styrol ist, die Komponente aus b) Butadien ist, und die Komponente aus c) eine ethylenisch ungesättigte Carbonsäure ist.

6. Polymerlatex nach einem der Ansprüche 1 bis 5, welcher, in polymerisierter Form, umfasst: Styrol, Butadien, Acrylsäure.

7. Polymerlatex nach einem der Ansprüche 1 bis 6, worin die Komponente c) ein Nitrilmonomeres allein oder in Mischungen enthält und in einer Menge von 1 bis 20 Gew.-% eingesetzt wird.

8. Polymerlatex nach Anspruch 7, worin das Nitrilmonomere Acrylnitril ist.

9. Polymerlatex nach einem der Ansprüche 1 bis 8, welcher, in polymerisierter Form, umfasst: Styrol, Butadien, Acrylnitril, Acrylsäure.

10. Verwendung des Polymerlatex nach einem der Ansprüche 1 bis 9 in einer Masse zum Streichen von Papier und Karton.

11. Verfahren zur Herstellung von Polymerlatex, wobei der Polymerlatex eine Glastemperatur zwischen -30 °C und 70 °C besitzt, hergestellt mit einem schwefel- und halogenfreien Kettenübertragungsmittel und umfassend, in polymerisierter Form:
a) 10 Gew.-% bis 80 Gew.-% von einem oder mehreren monovinylaromatischen Monomeren:
b) 20 Gew.-% bis 70 Gew.-% von einem oder mehreren konjugierten Dienmonomeren:
c) 0 Gew.-% bis 70 Gew.-% von einem oder mehreren Acrylatmonomeren; und
d) wobei der Rest ein bzw. mehrere andere copolymerisierbare Comonomere sind,
**dadurch gekennzeichnet, dass** das Kettenübertragungsmittel ein
Peroxid ist, ausgewählt aus mindestens einem Vertreter der folgenden Formeln:
1. Hydroperoxide der allgemeinen Strukturformel
R-O-O-H
wobei R = H oder einer der folgenden Reste bedeutet:
C₁-C₁₆ Alkyl (linear oder verzweigt),
C₁-C₁₆ Alkyl (linear oder verzweigt) in Kombination mit C₁-C₁₈ Aryl ,
C₁-C₁₈ Aryl ;
2. Peroxide der allgemeinen Strukturformel
R1-0-0-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl ,
C₁-C₁₈ Aryl ;
3. Peroxide der allgemeinen Strukturformel
R1-C(0)-0-0-C(0)-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl ,
C₁-C₁₈ Aryl ;
4. Peroxocarbonsäuren der allgemeinen Strukturformel
R-C(0)-0-0-H
wobei R = H oder einer der folgenden Reste bedeutet:
C₁-C₁₆ Alkyl (linear oder verzweigt),
C₁-C₁₆ Alkyl (linear oder verzweigt) in Kombination mit C₁-C₁₈ Aryl.
C₁-C₁₈ Aryl ;
5. Peroxocarbonsäureester der allgemeinen Strukturformel
R1-C(0)-0-0-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl,
C₁-C₁₈ Aryl :
6. Peroxodicarbonate der allgemeinen Strukturformel
R1-0-C(0)-0-0-C(0)-0-R2
wobei R1 und R2 gleich oder verschieden sind und einer der folgenden Reste bedeuten:
C₁-C₁₆ Alkyl (linear oder verzweigt),
C₁-C₁₆ Alkyl (linear oder verzweigt) in Kombination mit C₁-C₁₈ Aryl ,
C₁-C₁₈ Aryl .

12. Verfahren zur Herstellung von Polymerlatex nach Anspruch 11 bei Temperaturen von 0 bis 130 °C, bevorzugt von 60 bis 130 °C, besonders bevorzugt von 60 bis 100 °C, ganz besonders bevorzugt von 75 bis 100 °C, in Gegenwart von einem oder mehreren Emulgatoren und einem oder mehreren Initiatoren.

13. Verwendung von Hydroperoxiden als Kettenübertragungsmittel zur Herstellung von Polymerlatex nach einem der Ansprüche 1-9 ausgewählt aus mindestens einem Vertreter der folgenden Formel
R-O-O-H
wobei R = H oder einer der folgenden Reste bedeutet:
C₁-C₁₆ Alkyl (linear oder verzweigt),
C₁-C₁₆ Alkyl (linear oder verzweigt) in Kombination mit C₁- C₁₈ Aryl,
C₁ -C₁₈ Aryl .

## Claims

1. Polymer latex for use in coating paper and cardboard, wherein the polymer latex has a glass transition temperature of from -30 °C to 70° C, prepared using a sulphur-free and halogen-free chain transfer agent and comprising, in polymerised form:
a) from 10 % to 80 % by weight of one or more monovinylaromatic monomers;
b) from 20 % to 70 % by weight of one or more conjugated diene monomers;
c) from 0 % to 70 % by weight of one or more acrylate monomers; and
d) a remainder of one or more other copolymerisable comonomers,
**characterised in that** the chain transfer agent is a peroxide selected from at least one of the group corresponding to the following formulae:
1. hydroperoxides of the general formula:
R-O-O-H
wherein R is H or one of the following radicals:
linear or branched C₁-C₁₆ alkyl,
linear or branched C₁-C₁₆ alkyl in combination with C₁-C₁₈ aryl, or C₁-C₁₈ aryl;
2. peroxides of the general formula:
R1-O-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl;
3 peroxides of the general formula:
R1-C(O)-O-O-C(O)-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl;
4. peroxocarboxylic acids of the general formula:
R-C(O)-O-O-H
wherein R is H or one of the following radicals:
linear or branched C₁-C₁₆ alkyl,
linear or branched C₁-C₁₆ alkyl in combination with C₁-C₁₈ aryl, or C₁-C₁₈ aryl;
5. peroxocarboxylic acid esters of the general formula:
R1-C(O)-O-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl; and
6. peroxodicarbonates of the general formula:
R1-O-C(O)-O-O-C(O)-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl.

2. Polymer latex according to claim 1, wherein at least one peroxide is selected from the group consisting of said hydroperoxides.

3. Polymer latex according to claim 2, wherein said peroxide is selected from tert-butyl hydroperoxide and/or cumyl hydroperoxide.

4. Polymer latex according to claim 1, wherein a peroxide is selected from di-tert-butyl peroxide, tert-butyl peroxybenzoate and tert-butyl peroxy-3,5,5-trimethylhexanoate.

5. Polymer latex according to any one of claims 1 to 4, wherein component a) is styrene, component b) is butadiene and component c) is an ethylenically unsaturated carboxylic acid.

6. Polymer latex according to any one of claims 1 to 5, comprising in polymerised form: styrene, butadiene, acrylic acid.

7. Polymer latex according to any one of claims 1 to 6, wherein component c) contains a nitrile monomer, alone or in combination, and is used in a quantity of from 1 to 20 % by weight.

8. Polymer latex according to claim 7, wherein said nitrile monomer is acrylonitrile.

9. Polymer latex according to any one of claims 1 to 8, comprising in polymerised form: styrene, butadiene, acrylonitrile, acrylic acid.

10. Use of the polymer latex according to any one of claims 1 to 9 in a composition for coating paper and cardboard.

11. Process for the preparation of a polymer latex, wherein the polymer latex has a glass transition temperature of from -30 °C and 70° C, is prepared using a sulphur-free and halogen-free chain transfer agent and comprises, in polymerised form:
a) from 10 % to 80 % by weight of one or more monovinylaromatic monomers;
b) from 20 % to 70 % by weight of one or more conjugated diene monomers;
c) from 0 % to 70 % by weight of one or more acrylate monomers; and
d) a remainder of one or more other copolymerisable comonomers,
**characterised in that** said chain transfer agent is a peroxide selected from at least one of the group corresponding to the following formulae:
1. hydroperoxides of the general formula:
R-O-O-H
wherein R is H or one of the following radicals:
linear or branched C₁-C₁₆ alkyl,
linear or branched C₁-C₁₆ alkyl in combination with C₁-C₁₈ aryl, or C₁-C₁₈ aryl;
2. peroxides of the general formula:
R1-O-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl;
3. peroxides of the general formula:
R1-C(O)-O-O-C(O)-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl;
4. peroxocarboxylic acids of the general formula:
R-C(O)-O-O-H
wherein R is H or one of the following radicals:
linear or branched C₁-C₁₆ alkyl,
linear or branched C₁-C₁₆ alkyl in combination with C₁-C₁₈ aryl, or C₁-C₁₈ aryl;
5. peroxocarboxylic acid esters of the general formula:
R1-C(O)-O-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl; and
6. peroxodicarbonates of the general formula:
R1-O-C(O)-O-O-C(O)-O-R2
wherein R1 and R2 are identical or different and are one of the following radicals:
linear or branched C₁-C₁₆ alkyl,
linear or branched C₁-C₁₆ alkyl in combination with C₁-C₁₈ aryl, or C₁-C₁₈ aryl.

12. Process for the preparation of a polymer latex according to claim 11, at temperatures of from 0 to 130 °C, preferably from 60 to 130 °C, particularly preferably from 60 to 100° C and most particularly preferably from 75 to 100 °C, in the presence of one or more emulsifiers and one or more initiators.

13. Use of hydroperoxides as chain transfer agent for the preparation of a polymer latex according to any one of claims 1 to 9, selected from at least one of the group corresponding to the following formula:
R-O-O-H
wherein R is H or one of the following radicals:
linear or branched C₁-C₁₆ alkyl,
linear or branched C₁-C₁₆ alkyl in combination with C₁-C₁₈ aryl, or C₁-C₁₈ aryl.

## Revendications

1. Latex polymère destiné à être utilisé dans le couchage du papier et du carton, où le latex polymère possède une température de transition vitreuse entre -30°C et 70°C, est produit avec un agent de transfert de chaîne sans soufre et sans halogène et comprend, sous forme polymérisée :
a) de 10 % en masse à 80 % en masse d'un ou plusieurs monomères monovinylaromatiques ;
b) de 20 % en masse à 70 % en masse d'un ou plusieurs monomères diènes conjugués ;
c) de 0 % en masse à 70 % en masse d'un ou plusieurs monomères acrylates ; et
d) le reste étant constitué par un ou plusieurs autres comonomères copolymérisables,
**caractérisé en ce que** l'agent de transfert de chaîne est un peroxyde choisi parmi au moins un représentant des formules suivantes
1 . Hydroperoxydes de formule structurale générale
R-O-O-H
où R = H ou représente l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle
2. Peroxydes de formule structurale générale
R1-O-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle
3. Peroxydes de formule structurale générale
R1-C(O)-O-O-C(O)-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle;
4. Acides peroxocarboxyliques de formule structurale générale
R-C(O)-O-O-H
où R = H ou représente l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle;
5. Esters d'acides peroxocarboxyliques de formule structurale générale
R1-C(O)-O-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle
6. Peroxodicarbonates de formule structurale générale
R1-O-C(O)-O-O-C(O)-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle.

2. Latex polymère selon la revendication 1 où au moins un peroxyde est choisi dans le groupe des hydroperoxydes.

3. Latex polymère selon la revendication 2 où le peroxyde est choisi parmi l'hydroperoxyde de t-butyle et/ou l'hydroperoxyde de cumol.

4. Latex polymère selon la revendication 1 où un peroxyde est choisi parmi le peroxyde de di-t-butyle, le peroxybenzoate de t-butyle et le peroxy-3,5,5-triméthylhexanoate de t-butyle.

5. Latex polymère selon l'une des revendications 1 à 4 où le composant de a) est le styrène, le composant de b) est le butadiène et le composant de c) est un acide carboxylique éthyléniquement insaturé.

6. Latex polymère selon l'une des revendications 1 à 5 qui comprend, sous forme polymérisée : du styrène, du butadiène, de l'acide acrylique.

7. Latex polymère selon l'une des revendications 1 à 6 où le composant c) contient un monomère nitrile seul ou dans des mélanges et est utilisé en une quantité de 1 à 20 % en masse.

8. Latex polymère selon la revendication 7 où le monomère nitrile est l'acrylonitrile.

9. Latex polymère selon l'une des revendications 1 à 8 qui comprend, sous forme polymérisée : du styrène, du butadiène, de l'acrylonitrile, de l'acide acrylique.

10. Utilisation du latex polymère selon l'une des revendications 1 à 9 dans une masse pour le couchage du papier et du carton.

11. Procédé de production de latex polymère où le latex polymère possède une température de transition vitreuse entre -30°C et 70°C, est produit avec un agent de transfert de chaîne sans soufre et sans halogène et comprend, sous forme polymérisée :
a) 10 % en masse à 80 % en masse d'un ou plusieurs monomères monovinylaromatiques ;
b) 20 % en masse à 70 % en masse d'un ou plusieurs monomères diènes conjugués ;
c) 0 % en masse à 70 % en masse d'un ou plusieurs monomères acrylates ; et
d) où le reste est constitué par un ou plusieurs autres comonomères copolymérisables,
**caractérisé en ce que** l'agent de transfert de chaîne est un peroxyde choisi parmi au moins un représentant des formules suivantes
1 Hydroperoxydes de formule structurale générale
R-O-O-H
où R = H ou représente l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle ;
2. Peroxydes de formule structurale générale
R1-O-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle ;
3. Peroxydes de formule structurale générale
R1-C(O)-O-O-C(O)-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle ;
4. Acides peroxocarboxyliques de formule structurale générale
R-C(O)-O-O-H
où R = H ou représente l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle ;
5. Esters d'acides peroxocarboxyliques de formule structurale générale
R1-C(O)-O-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle;
6. Peroxodicarbonates de formule structurale générale
R1-O-C(O)-O-O-C(O)-O-R2
où R1 et R2 sont identiques ou différents et représentent l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle.

12. Procédé de production de latex polymère selon la revendication 11 à des températures de 0 à 130°C, de préférence de 60 à 130°C, de manière particulièrement préférée de 60 à 100°C, de manière tout particulièrement préférée de 75 à 100°C, en présence d'un ou plusieurs émulsifiants et d'un ou plusieurs initiateurs.

13. Utilisation d'hydroperoxydes comme agents de transfert de chaîne pour la production de latex polymère selon l'une des revendications 1-9 choisis parmi au moins un représentant de formule générale
R-O-O-H
où R = H ou représente l'un des groupements suivants :
C₁-C₁₆ alkyle (linéaire ou ramifié)
C₁-C₁₆ alkyle (linéaire ou ramifié) en combinaison avec C₁-C₁₈ aryle,
C₁-C₁₈ aryle.
